# EUROPEAN PATENT SPECIFICATION

(11) **EP 3 664 743 B1**
(45) Date of publication and mention of the grant of the patent: **26.06.2024**
(21) Application number: 18758689.6
(22) Date of filing: 09.08.2018
(51) Int. Cl.: A61C 8/00

(54) **DENTAL IMPLANT ASSEMBLY**
ZAHNIMPLANTATANORDNUNG
ENSEMBLE IMPLANT DENTAIRE

(30) Priority: 09.08.2017 GB 201712780
(43) Date of publication of application: 17.06.2020
(60) Divisional application: 24173504.2
(73) Proprietor: Neoss Limited, Harrogate Yorkshire HG1 2PW (GB)
(72) Inventor: ENGMAN, Fredrik, 41132 Göteborg (SE)
(74) Representative: HGF
(86) International application number: PCT/GB2018/052265
(87) International publication number: WO 2019/030525

(56) References cited:
- EP-A2- 0 747 017
- EP-A2- 0 747 017
- EP-A2- 0 747 017
- KR-B1- 101 731 541
- KR-B1- 101 731 541
- KR-B1- 101 731 541
- US-A1- 2007 281 279
- US-A1- 2007 281 279
- US-A1- 2007 281 279
- US-B2- 6 619 958
- US-B2- 6 619 958
- US-B2- 6 619 958

## Description

The present disclosure relates generally to dental implant systems. More particularly, the disclosure relates to a dental implant assembly from which an impression can be taken of a patient's mouth (either using impression material or by digital scanning, for example) in order to design a dental prosthesis for that patient.

### BACKGROUND

The process of providing a patient with a dental prosthesis requires a number of stages that may vary depending on the type of treatment, indication, clinician's preference, etc. Generally in the first stage, an incision is made through the gingiva to expose the underlying bone so that a dental implant can be placed in the jawbone. A second component, commonly known as a healing abutment, is then attached to the coronal end of the dental implant (for example by screw-fit or press-fit) so that, during healing of the gingiva and as the dental implant integrates with the bone, the coronal end of the implant does not become covered by the gingiva.

The healing abutment has to be temporarily removed in order to take an adequate impression which is used to transfer the implant's positional information to a model from which the final prosthesis can be created. During this step, the healing abutment is replaced by a third component, commonly known as an impression coping or scan abutment, which is attached to the coronal end of the dental implant, and from which the impression can be obtained.

Impression material can be used to create a negative imprint of the impression coping ("an impression") in a well-known manner. Alternatively, it is possible to create a digital impression by scanning a scan abutment or similar using, for example an intra-oral scanner such as the 3Shape(^{™}) TRIOS described at http://www.3.shape.com/products/trios/intraoral-scanners. Regardless of the impression-taking technique and scan technology used, the transfer of the implant's positional information from the patient to the model (stone or digital or other) requires accurate recording of positional information such as height, orientation, axis angulation, and centering, among others. Therefore, all components used in the method must be manufactured to a high tolerance and the technique itself must be performed with a high degree of accuracy.

Once the impression has been taken, the impression coping or scan abutment is removed and the healing abutment is normally reattached to the coronal end of the dental implant and left in place until healing and osseointegration is complete.

When it is desired to attach the final prosthesis made from the impression, the healing abutment is once again removed so that the prosthesis and its abutment can be attached.

As can be seen from the above, several of these stages involve removing and reattaching components to the dental implant which disrupts the healing process of the soft tissue and potentially also the underlying bone and thereby potentially affecting the implant treatment success from both a functional and aesthetic point of view. Each of these stages is generally done under local anaesthesia and requires skilled medical personnel.

The known techniques record the position of the implant but not the geometry of the soft tissue emergence profile created by the healing abutment. One reason that this has been acceptable is that the generally used healing abutments are simply cylindrical and do not generate anatomically relevant shapes, whose positional information needs to be recorded. Another reason is that the soft tissue emergence collapses so quickly that a proper impression of it, digital or otherwise, cannot be taken using conventional techniques.

There are other less common techniques known involving placing a provisional or permanent abutment on the implant without using a healing abutment at all. An impression is taken by mounting an impression cap on the provisional or permanent abutment. These techniques can impair the outcome of the implant as the tall post will transfer mastication forces down to the implant during the most delicate healing phase, just after placement of the implant and before the impression has been taken. These techniques also do not record a proper soft tissue profile, nor does the provisional or permanent abutment have an ideal emergence profile as they are positioned before swelling is gone and healing is completed.

EP0747017A2 relates to a method of installing a restorative tooth prosthesis. KR101731541B1 relates to an abutment for healing. US20070281279A1 relates to a custom impression transfer coping for capturing the custom markings of a healing abutment. US6619958B2 relates to an implant delivery system and includes a carrier that is attached to an implant. An impression coping and its associated bolt can be affixed into a socket of the carrier and a press fit engagement provides retention force so that an impression can be made without the risk of the impression coping loosening from the carrier.

### BRIEF SUMMARY OF THE DISCLOSURE

The invention is defined in the appended claims. In accordance with an aspect of the present invention there is provided a dental implant assembly comprising:
a healing component removably attachable to a coronal end of a dental implant,
an impression component removably attachable to the healing component,
wherein one of the healing component and the impression component has an internal bore for receiving at least part of the other of said healing component and impression component therein, the internal bore having an axial locator providing an endstop for relative axial movement between said healing component and said impression component,
   wherein the assembly further comprises a rotational locator limiting rotational movement between said impression component and said healing component, the rotational locator comprising a formation on an outer surface of one of the impression component and the healing component and/or a formation on an inner surface of said bore, and
   whereby a digital impression recording positional information about the dental implant can be taken without having to remove the healing component from the implant.

Recording positional information without having to remove the healing component from the implant has numerous advantages including reducing the number of surgical steps involved.

Advantageously, the impression component can not only record the position of the implant but also indirectly record the soft tissue emergence profile surrounding the implant.

In an embodiment, said impression component has an outer surface, an upper portion and a lower portion.

According to the invention, the healing component comprises said internal bore for receiving at least part of the lower portion of said impression component therein, the internal bore having a shoulder on an inner surface thereof acting as said axial locator, and
wherein said rotational locator comprises a formation on said outer surface of the impression component and a formation on said inner surface of said bore of the healing component.

In an embodiment, said shoulder may engage with an apical end surface of the impression component to provide said axial locator. The formation on said inner surface of said bore of the healing component may comprise a groove and said formation on said outer surface of the impression component comprises a protrusion. Alternatively, said formation on said inner surface of said bore of the healing component comprises a protrusion and said formation on said outer surface of the impression component comprises a groove.

The healing component may comprise PEEK or titanium.

The impression component comprises a material and/or a textured surface compatible with digital scanning.

In an embodiment, the dental implant assembly further comprises a press-fit feature between the impression component and the healing component. The press-fit feature may comprise a localised narrowing of the internal bore of the healing component and/or a localised widening of the external diameter of the lower portion of the impression component.

In an embodiment, the dental implant assembly further comprises a centering feature for centering the impression component in the bore of the healing component. The centering feature may comprise a chamfered coronal edge on the bore of the healing component and/or a recess on an external surface at the apical end of the impression component or vice versa.

Preferably, said positional information includes any of:
a. the height of the coronal end of the dental implant;
b. the rotational orientation of the dental implant about a longitudinal axis of the implant;
c. the angulation of a plane containing the coronal top surface of the dental implant, compared to a horizontal plane or an anatomical reference point and/or another implant.

In an embodiment, the upper portion of said impression component includes a cone or pyramid or other shape at its coronal end, whose tip and/or corners and/or faces can be used as a marker for positional information during digital scanning thereof.

In an embodiment, the upper portion of said impression component includes a substantially horizontal surface and/or a substantially vertical surface which can be used as a marker for positional information during and/or after digital scanning thereof.

In an embodiment, when said axial locator is engaged, the impression component and healing component combined have a predetermined height dependent upon the dimensions of the impression component and/or healing component selected.

The predetermined height may be measured from said substantially horizontal surface on said impression component. Preferably, said predetermined heights are stored in a digital library which can be referred to during digital scanning and design.

In an embodiment, the healing component has a substantially planar or conical surface at its apical end for engaging the coronal end of the dental implant.

The healing component may preferably have an anatomical shape. According to another aspect of the invention there is provided a dental implant kit comprising the dental implant assembly of any of the preceding paragraphs and a plurality of said healing components, each healing component having an anatomical shape representing different anatomical positions such as different teeth positions, for example a pre-molar, a canine, a central incisor. The different anatomical shapes may be stored in and compared or matched with a digital library which can be used during or after digital scanning and/or during design of a final prosthesis.

In the following, there is described a method of obtaining a dental impression recording positional information about a dental implant, the method comprising the steps of:
a. providing a dental implant assembly according to any of the preceding paragraphs;
b. attaching said healing component to a coronal end of an implanted dental implant;
c. inserting the lower portion of the impression component into or onto the healing component until the axial locator is engaged; and
d. obtaining an impression by digital scanning.

The method may further comprise the step of centering the impression component in the bore of the healing component before the step of inserting.

The method may further comprise the step of rotationally aligning the impression component in the bore of the healing component using said rotational locator before the step of inserting.

The method may further comprise the step of comparing the digital scan with a digital library containing the geometry of the healing component to determine a soft tissue emergence profile created by that specific healing component. The soft tissue emergence profile may be used during design of a final prosthesis.

### BRIEF DESCRIPTION OF THE DRAWINGS

Embodiments of the invention are further described hereinafter, by way of example only, with reference to the accompanying drawings, in which:
Figure 1 shows a selection of healing components suitable for use in the claimed assembly, each healing component being shown in a side view (upper image) and a top view (lower image);
Figure 2 shows a selection of impression components suitable for use in the claimed assembly, each impression component being shown in a side view (upper image) and a top view (lower image);
Figure 3 shows a range of healing components having different anatomical shapes suitable for different teeth positions and suitable for use in the claimed invention, each healing component being shown in a cross-sectional side view A-A (upper image), a top view (middle image) and another cross-sectional side view B-B to F-F respectively (lower image);
Figure 4 is a side view of a healing component and impression component assembled together on a dental implant;
Figure 4A is a cross-sectional view on A-A of the Figure 4 assembly;
Figure 5 is another side view of the Figure 4 healing component and impression component assembled together;
Figure 5A is a cross-sectional view on B-B of the Figure 5 assembly;
Figure 5B is an enlarged view of detail from Figure 5A;
Figure 6A is a cross-sectional side view of the healing component;
Figure 6B is a cross-sectional side view of the healing component and impression component assembly with the healing component screw omitted;
Figure 7 is a cross-sectional view of an impression component being inserted into a healing component;
Figure 8 is a cross-sectional view of an impression component being inserted further into a healing component and aligned therein;
Figure 9A is a clinical representation (side view) of the of the soft tissue emergence profile created by the healing component; and
Figure 9B is a clinical representation (top view) of the of the soft tissue emergence profile created by the healing component.

### DETAILED DESCRIPTION

In the present disclosure, the following terms may be understood with reference to the explanations below:
The term **"dental implant"** includes a dental implant per se, to which the healing component defined below may be attached directly and also includes an assembly comprising a dental implant and an abutment or spacer, wherein the healing component defined below may be attached to the abutment or spacer.
The term **"healing component"** may mean a healing abutment, tissue former, provisional abutment, final abutment or other component attachable to a dental implant during healing of the gingiva
The term **"impression component"** may mean an impression coping, scan abutment, scan peg, or other component from which an impression may be taken either by using impression material or by using digital scanning.
The term **"upper"** or **"coronal"** refers to the direction towards the crown of the tooth.
The term **"lower"** or **"apical"** refers to the direction towards the root of the tooth.
The term **"attachable"** may mean directly attachable or indirectly attachable with one or more intermediate components therebetween.
The term **"bore"** may have a substantially constant diameter or may have a varying diameter along its length and/or may have localised formations on an internal surface thereof.
The terms **"axial locator"** and **"rotational locator"** may mean components which limit axial and rotational (respectively) movement of one component in relation to another.
The term **"anatomical shape"** may mean a shape which resembles or mimics a natural anatomical structure. The anatomical shape may resemble an emergence profile, for example, whose actual cross-sectional shape at the level of the gingiva margin depends on the type of tooth (e.g. round in the case of an incisor, more triangular or square in the case of others).

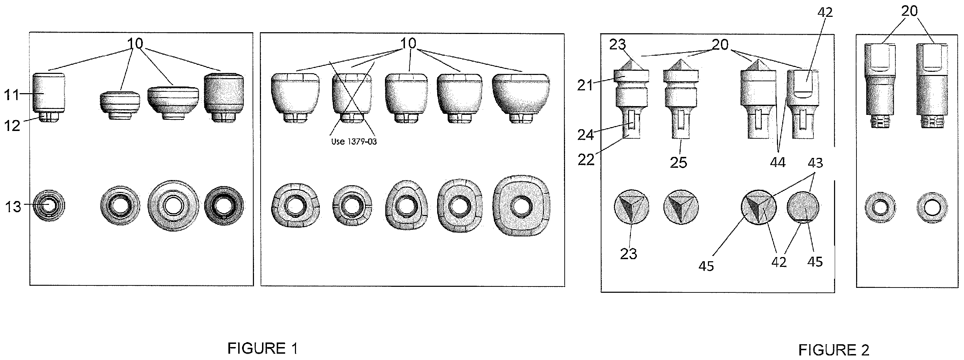

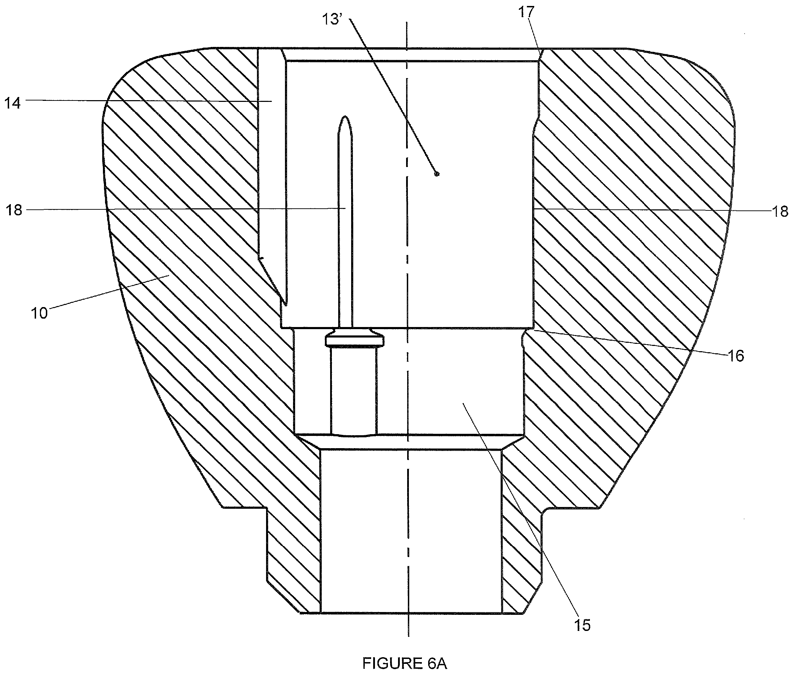

Referring to Figure 1, a selection of healing components 10 suitable for attaching to a coronal end of a dental implant are illustrated. A range of sizes and shapes are provided so that the dental clinician can select the most suitable for any particular case. Externally, the healing components are conventional in appearance, having an anatomically shaped upper portion 11 and a lower portion 12 of smaller diameter. The healing component is attachable in a conventional way to an implanted dental implant (not shown) by inserting a healing component screw (not shown) through an internal bore 13. The internal bore 13 has an upper portion 13' which is preferably cylindrical (shown in Figure 6A).

Figure 2a shows a selection of impression components 20 suitable for assembling with a healing component according to an embodiment of the invention. The illustrated impression components are suitable to be digitally scanned in order to create an impression, as will be described later. Each impression component comprises an upper portion 21 and a lower portion 22 of smaller diameter. The diameter of the lower portion 22 is such that it can be inserted into the bore 13 of the healing component in order to assemble the impression component and healing component together.

The impression component comprises a material and/or a textured surface compatible with digital scanning. The material and/or textured surface should be nonreflective, or at least one with minimal reflection which can be achieved for example by roughening the surface or using optically matt materials.

An impression coping suitable for digital scanning requires distinct geometrical features that can be used as markers and recorded by the scanner and subsequently identified by the software to identify rotation, centre, height and angulation relative the implant and the implant axis. With reference to Figure 2, such features normally include at least portions with a non-symmetrical geometry 42, a partial or full circular geometry 43 and a partial or full cylinder 44 or plane geometry 45 for the determination of rotation, centre, height, and/or angulation.

An optional pyramid formation 23 on the top of the upper portion can be used as marker during a digital scanning process. Other shapes are possible for the marker, for example a line, cone or other shape having a defined tip, plane, point or corner. Undercuts and other more complex shapes are not required for digital scanning as these undesirably add complexity during capturing of the shape during the scan and during processing by the software.

The lower portion 22 of the impression component is provided with a formation 24 that can be used as a rotational locator to rotationally align the impression component with a healing component as the two are assembled together. The formation 24 may be a longitudinally-extending protrusion or lug.

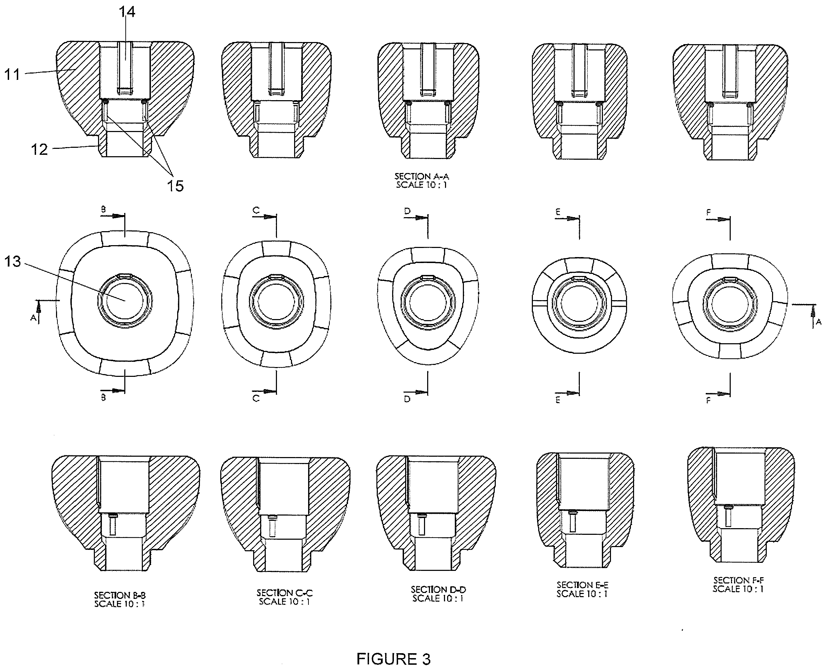

Referring to Figure 3, the internal configuration of the healing component 10 can be seen showing a region 15 where a healing component screw (not shown) can be received.

The upper portion 11 includes a formation 14 that can be used as a rotational locator to rotationally align the healing component with an impression component as the two are assembled together. In the illustrated embodiment, the formation 14 is a longitudinally-extending groove into which the protrusion 24 of the impression component can be located.

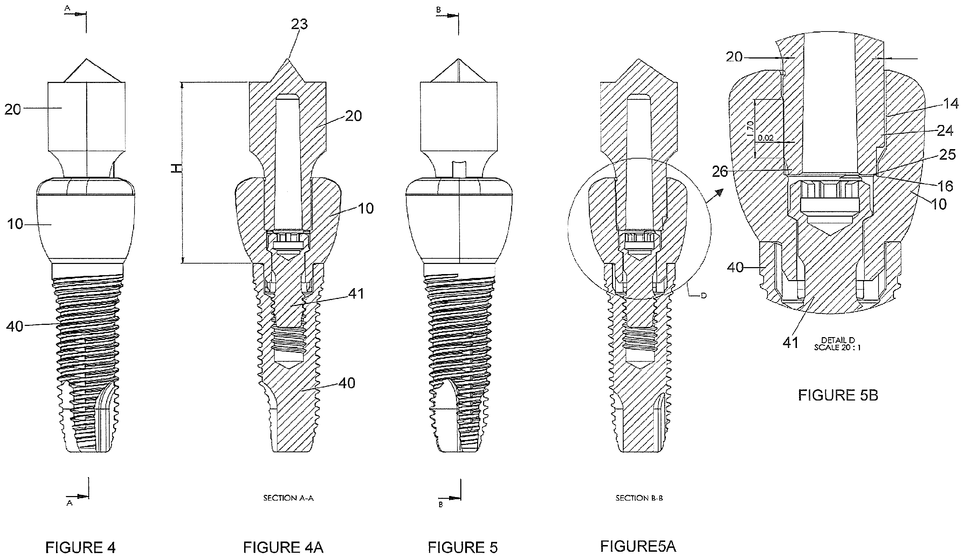

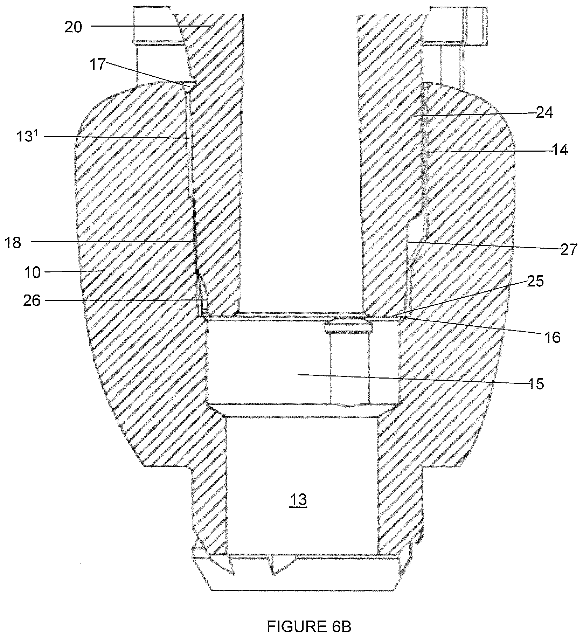

Figures 4 and 5 are two different side views of the impression component 20 and healing component 10 assembled together on a dental implant 40. Figures 4A and 5A are the respective cross-sectional views. A healing component screw 41 connects the healing component 10 to the implant 40. As shown in Figure 5B and in Figure 6, the apical end 25 of the impression component rests on a shoulder 16 in the internal bore of the healing component; this shoulder acts as an axial locator such that, when the healing component 10 and impression component 20 are assembled together, their combined height H (shown in Figure 4A) is predetermined for any given combination of healing and impression components. Stability for and accuracy of digital scanning is improved by maximising the depth and minimising the diameter of the connection between the upper portion 11 of the healing component and the lower portion 22 of the impression component.

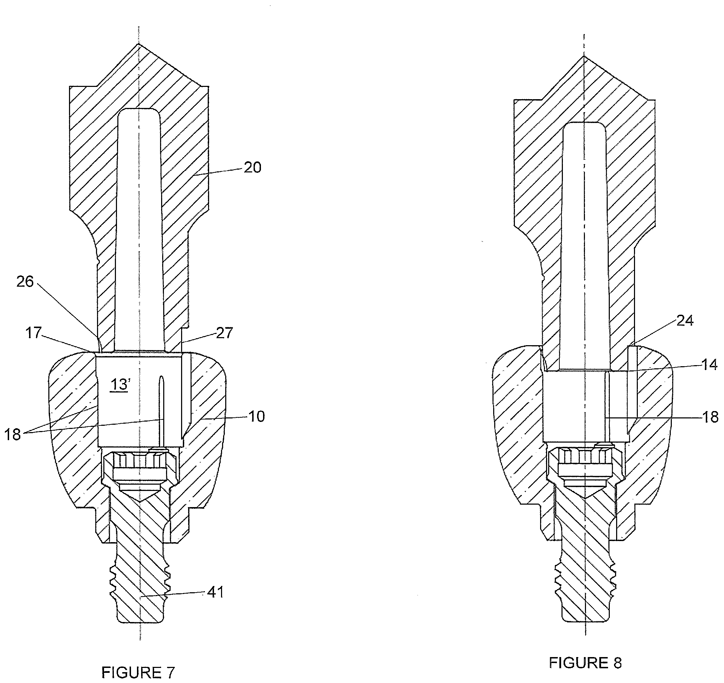

Figures 6a and 6b show a centering feature that can be used to center the impression component 20 in the bore of the healing component 10 before it is inserted fully therein. The healing component is provided with a chamfered edge 17 at the coronal end of the bore 13. The lower portion 22 of the impression component 20 has a narrowed portion 27 near its apical end which has a cutaway or narrowed diameter as compared with the rest of the lower portion 22. The narrowed portion 27 of the impression component has a smaller diameter than the upper portion 13' of the internal bore 13 of the healing component 10. As best shown in Figure 7, as the impression component 20 approaches the healing component 10, the chamfered edge 17 and upper portion 13' of the bore of the healing component 10 guides the lower portion 27 of the impression component 20 to the centre of the bore 13 of the healing component 10 as the impression component 20 moves axially downwards towards the healing component.

Further axial downward movement of the impression component cannot occur until the protrusion 24 is rotationally aligned with the groove 14 in the healing component (see Figure 8). With the protrusion 24 and groove 14 properly rotationally aligned, further downward axial movement causes the protrusion 24 and groove 14 to act as a rotational locator, limiting rotational movement between the impression component and the healing component.

To further improve and secure centering of the impression component 20 in the healing component 10, a press-fit feature is provided in the form of, for example, a localised narrowing 18 or ridges in the internal bore 13 positioned below the upper portion 13. The press-fit feature can engage with the outer surface, including the lower portion 27, of the impression component 20. To improve the start of the press-fit, a recess 26 of the impression component can be incorporated to delay the press-fit engagement until a more axially stable interaction between the two components has been reached.

Now preferably under press-fit, yet further downward axial movement of the impression component eventually causes the apical end surface 25 to reach and come to rest on the shoulder 16 as shown in Figure 6b.

Once the impression component has been fully engaged with the healing component, the impression can be taken in a conventional way, either using impression material or by using digital scanning. A digital library may be provided containing positional data about the various available combinations of impression components and healing components.

Once the impression has been taken, it is easy to remove the impression component from the assembly when it is no longer needed, leaving the healing component undisturbed for healing to continue.

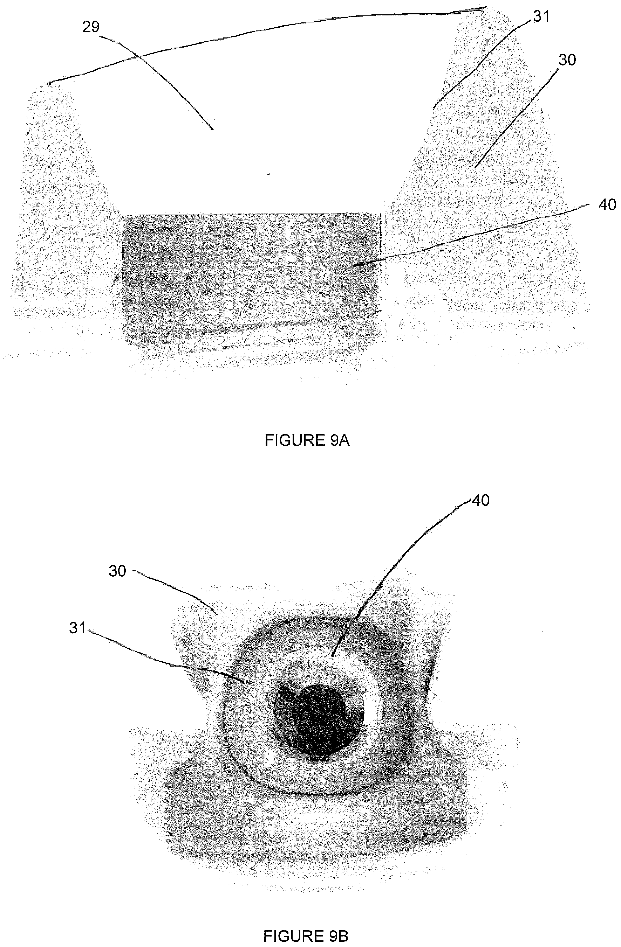

Figures 9A and 9B show how the healing component (not shown in Figs 9A and 9B) creates an imprint 29 in the soft tissue 30 with a soft tissue emergence profile 31 around the implant 40. The soft tissue emergence profile is determined by the outer shape of the healing component 10.

Use of the dental implant assembly described herein offers significant advantages over the known prior art. In particular, the number of stages can be reduced, saving cost and resource, and disrupting the healing process less, and providing a means to make an accurate impression of the soft tissue emergence profile before it collapses. Although the above-described example involves a temporary healing abutment which can later be replaced with a provisional or final abutment associated with a prosthesis, it is alternatively possible for the provisional or final abutment itself to perform the function of the claimed healing component if it has the appropriate anatomical shape for healing.

Some implant systems have a small number of implant-to-abutment connections, for example one or two major, for a wide range of implant diameters 3, 5-8 mm and different geometries like straight and tapered. In such an implant system, if the anatomical shape of the healing component matches the shapes of the abutments in the implant system (possibly made in different materials, or shapes in a digital library or both), then a very effective working process flow can be achieved whereby any implant size can be treated, using only one impression component, matching the final prosthesis (either a stock abutment or an individually designed abutment created from a digital library) with the marginal shape of the healing component thus improving aesthetics, minimizing pain and decreasing cost for the treatment.

The prior art techniques typically require three surgical interventions over the following eight steps (surgical intervention I for step a, surgical intervention II for steps b-f and surgical intervention III for steps g-h):
a. attaching a healing component to the implanted dental implant and allowing a period of healing to elapse
b. disrupting healing to remove the healing component (requiring local anaesthesia and skilled medical personnel)
c. replacing the healing component by attaching an impression component to the dental implant
d. taking the impression
e. removing the impression component
f. reattaching the healing component for continued healing
g. removing the healing component after healing
h. attaching the prosthesis (formed from the impression) to the dental implant.

The technique described herein completely eliminates two of these stages (b and f) and one surgical intervention (II). Instead only two surgical interventions are required over the following six steps (surgical intervention I for step a and surgical intervention II for steps e-f):
a. attaching a healing component to the implanted dental implant and allowing a period of healing to elapse
b. inserting the impression component into the bore of the healing component (simple and not requiring local anaesthesia and skilled medical personnel)
c. taking the impression
d. removing the impression component
e. removing the healing component after the full period of healing has elapsed
f. attaching the prosthesis (formed from the impression) to the dental implant.

In addition, the technique described above allows for capturing information about the soft tissue emergence profile as its shape is determined by the specific healing component selected,

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

The invention is not restricted to the details of any foregoing embodiments but is defined by the appended claims.

### Reference numerals

- 10: healing component
- 11: upper portion of healing component
- 12: lower portion of healing component
- 13: internal bore of the healing component
- 13': upper portion of internal bore
- 14: formation (groove)
- 15: region for receiving healing component screw
- 16: axial locator (shoulder) on healing component
- 17: centering feature on healing component (chamfer)
- 18: press fit feature on healing component (narrowed diameter)
- H: combined height of impression component and healing component when assembled together
- 20: impression component
- 21: upper portion of impression component
- 22: lower portion of impression component
- 23: pyramid formation
- 24: formation (protrusion)
- 25: apical end surface of impression component
- 26: centering feature on impression component (recess)
- 27: narrowed portion of the lower portion of the impression component
- 29: imprint
- 30: soft tissue
- 31: soft tissue emergence profile
- 40: dental implant
- 41: healing component screw
- 42: a non-symmetrical geometry
- 43: circular geometry
- 44: cylinder
- 45: plane

## Claims

1. A dental implant assembly comprising:
a. a healing component (10) removably attachable to a coronal end of a dental implant (40),
b. an impression component (20) removably attachable to the healing component (10) by a press-fit feature between the impression component (20) and the healing component (10),
wherein the healing component (10) has an internal bore (13) for receiving at least part of the impression component (20) therein, the internal bore (13) having an axial locator (16) providing an endstop for relative axial movement between said healing component (10) and said impression component (20),
wherein the assembly further comprises a rotational locator limiting rotational movement between said impression component (20) and said healing component (10), the rotational locator comprising a formation (24) on an outer surface of the impression component (20) and a formation (14) on an inner surface of said bore such that neither the impression component nor the healing component has rotational symmetry, and
whereby a digital impression recording positional information about the dental implant can be taken without having to remove the healing component (10) from the implant.

2. The dental implant assembly of claim 1 wherein said impression component (20) has an outer surface, an upper portion (21) and a lower portion (22),
wherein said healing component (10) comprises said internal bore (13) for receiving at least part of the lower portion (22) of said impression component (20) therein, the internal bore (13) having a shoulder on an inner surface thereof acting as said axial locator, and
wherein said rotational locator comprises a formation (24) on said outer surface of the impression component (20) and/or a formation (14) on said inner surface of said bore of the healing component (10).

3. The dental implant assembly of claim 2 wherein said shoulder engages with an apical end surface (25) of the impression component (20) to provide said axial locator (16).

4. The dental implant assembly of claim 1 or claim 2, wherein said formation (14) on said inner surface of said bore (13) of the healing component (10) comprises a groove and said formation (24) on said outer surface of the impression component (20) comprises a protrusion.

5. The dental implant assembly of claim 1 or claim 2, wherein said formation on said inner surface of said bore (13) of the healing component (10) comprises a protrusion and said formation on said outer surface of the impression component comprises a groove.

6. The dental implant assembly of any of the preceding claims wherein the healing component (10) comprises PEEK or titanium.

7. The dental implant assembly of any of the preceding claims wherein the impression component (20) comprises a material and/or a textured surface compatible with digital scanning.

8. The dental implant assembly of any of the preceding claims wherein the press-fit feature comprises a localised narrowing (18) of the internal bore (13) of the healing component (10) and/or a localised widening of the external diameter of the lower portion (22) of the impression component (20).

9. The dental implant assembly of any of the preceding claims further comprising a centering feature (17) for centering the impression component in the bore of the healing component (10), preferably wherein the centering feature (17) comprises a chamfered coronal edge on the bore (13) of the healing component (10) and/or wherein the centering feature (17) comprises a recess on an external surface at the apical end (25) of the impression component (20).

10. The dental implant assembly of any of the preceding claims wherein said positional information includes any of:
a. the height of the coronal end of the dental implant (40);
b. the rotational orientation of the dental implant (40) about a longitudinal axis of the implant;
c. the angulation of a plane containing the coronal top surface of the dental implant (40), compared to a horizontal plane or an anatomical reference point and/or another implant.

11. The dental implant assembly of any of the preceding claims wherein the upper portion (21) of said impression component (20) includes:
a. a cone or pyramid (23) or other shape at its coronal end, whose tip and/or corners and/or faces can be used as a marker for positional information during and/or after digital scanning thereof; and/or
b. a substantially horizontal surface and/or a substantially vertical surface which can be used as a marker for positional information during and/or after digital scanning thereof.

12. The dental implant assembly of claim 11 wherein, when said axial locator is engaged, the impression component (20) and healing component (10) combined have a predetermined height measured from said substantially horizontal surface on said impression component (20) which is dependent upon the dimensions of the impression component (20) and/or healing component (10) selected.

13. The dental implant assembly of any of the preceding claims wherein the healing component (10) has a substantially planar or conical surface at its apical end for engaging the coronal end of the dental implant (40).

14. A dental implant kit comprising the dental implant assembly of any of claims 1-13 and a plurality of said healing components (10) having anatomical shapes suitable for different teeth positions.

## Patentansprüche

1. Zahnimplantatanordnung, umfassend:
a. eine Heilkomponente (10), die abnehmbar an einem koronalen Ende eines Zahnimplantats (40) anbringbar ist,
b. eine Abdruckkomponente (20), die durch ein Presspassmerkmal zwischen der Abdruckkomponente (20) und der Heilkomponente (10) abnehmbar an der Heilkomponente (10) anbringbar ist,
wobei die Heilkomponente (10) eine Innenbohrung (13) zum Aufnehmen von zumindest Teil der Abdruckkomponente (20) darin aufweist, wobei die Innenbohrung (13) einen axialen Positionierer (16) aufweist, der einen Endanschlag für relative axiale Bewegung zwischen der Heilkomponente (10) und der Abdruckkomponente (20) bereitstellt,
wobei die Anordnung ferner einen Rotationspositionierer umfasst, der Rotationsbewegung zwischen der Abdruckkomponente (20) und der Heilkomponente (10) begrenzt, wobei der Rotationspositionierer eine Ausformung (24) an einer Außenoberfläche der Abdruckkomponente (20) und eine Ausformung (14) an einer Innenoberfläche der Bohrung umfasst, sodass weder die Abdruckkomponente noch die Heilkomponente Rotationssymmetrie aufweist, und
wodurch ein digitaler Abdruck, der Positionsinformationen zu dem Zahnimplantat aufzeichnet, gemacht werden kann, ohne dass die Heilkomponente (10) von dem Implantat entfernt werden muss.

2. Zahnimplantatanordnung nach Anspruch 1, wobei die Abdruckkomponente (20) eine Außenoberfläche, einen oberen Abschnitt (21) und einen unteren Abschnitt (22) aufweist,
wobei die Heilkomponente (10) die Innenbohrung (13) zum Aufnehmen von zumindest Teil des unteren Abschnittes (22) der Abdruckkomponente (20) darin umfasst, wobei die Innenbohrung (13) eine Schulter an einer Innenoberfläche davon aufweist, die als der axiale Positionierer fungiert, und
wobei der Rotationspositionierer eine Ausformung (24) an der Außenoberfläche der Abdruckkomponente (20) und/oder eine Ausformung (14) an der Innenoberfläche der Bohrung der Heilkomponente (10) umfasst.

3. Zahnimplantatanordnung nach Anspruch 2, wobei die Schulter mit einer apikalen Endoberfläche (25) der Abdruckkomponente (20) in Eingriff ist, um den axialen Positionierer (16) bereitzustellen.

4. Zahnimplantatanordnung nach Anspruch 1 oder Anspruch 2, wobei die Ausformung (14) an der Innenoberfläche der Bohrung (13) der Heilkomponente (10) eine Nut umfasst und die Ausformung (24) an der Außenoberfläche der Abdruckkomponente (20) einen Vorsprung umfasst.

5. Zahnimplantatanordnung nach Anspruch 1 oder Anspruch 2, wobei die Ausformung an der Innenoberfläche der Bohrung (13) der Heilkomponente (10) einen Vorsprung umfasst und die Ausformung an der Außenoberfläche der Abdruckkomponente eine Nut umfasst.

6. Zahnimplantatanordnung nach einem der vorhergehenden Ansprüche, wobei die Heilkomponente (10) PEEK oder Titan umfasst.

7. Zahnimplantatanordnung nach einem der vorhergehenden Ansprüche, wobei die Abdruckkomponente (20) ein Material und/oder eine texturierte Oberfläche umfasst, die mit digitalem Scannen kompatibel ist.

8. Zahnimplantatanordnung nach einem der vorhergehenden Ansprüche, wobei das Presspassmerkmal eine örtliche Verengung (18) der Innenbohrung (13) der Heilkomponente (10) und/oder eine örtliche Erweiterung des Außendurchmessers des unteren Abschnittes (22) der Abdruckkomponente (20) umfasst.

9. Zahnimplantatanordnung nach einem der vorhergehenden Ansprüche, ferner umfassend ein Zentriermerkmal (17) zum Zentrieren der Abdruckkomponente in der Bohrung der Heilkomponente (10), wobei bevorzugt das Zentriermerkmal (17) eine abgeschrägte koronale Kante an der Bohrung (13) der Heilkomponente (10) umfasst und/oder wobei das Zentriermerkmal (17) eine Aussparung an einer externen Oberfläche an dem apikalen Ende (25) der Abdruckkomponente (20) umfasst.

10. Zahnimplantatanordnung nach einem der vorhergehenden Ansprüche, wobei die Positionsinformationen ein beliebiges des Folgenden beinhalten:
a. die Höhe des koronalen Endes des Zahnimplantats (40);
b. die Rotationsausrichtung des Zahnimplantats (40) um eine Längsachse des Implantats;
c. die Winkelung einer Ebene, welche die koronale obere Oberfläche des Zahnimplantats (40) enthält, verglichen mit einer horizontalen Ebene oder einem anatomischen Referenzpunkt und/oder einem anderen Implantat.

11. Zahnimplantatanordnung nach einem der vorhergehenden Ansprüche, wobei der obere Abschnitt (21) der Abdruckkomponente (20) Folgendes beinhaltet:
a. einen Kegel oder eine Pyramide (23) oder eine andere Form an seinem koronalen Ende, dessen Spitze und/oder Ecken und/oder Flächen als Markierung für Positionsinformationen während und/oder nach digitalem Scannen davon verwendet werden können; und/oder
b. eine im Wesentlichen horizontale Oberfläche und/oder eine im Wesentlichen vertikale Oberfläche, die als Markierung für Positionsinformationen während und/oder nach digitalem Scannen davon verwendet werden kann.

12. Zahnimplantatanordnung nach Anspruch 11, wobei, wenn der axiale Positionierer in Eingriff genommen ist, die Abdruckkomponente (20) und die Heilkomponente (10) kombiniert eine vorbestimmte Höhe gemessen von der im Wesentlichen horizontalen Oberfläche an der Abdruckkomponente (20) aufweisen, die von den Abmessungen der ausgewählten Abdruckkomponente (20) und/oder Heilkomponente (10) abhängt.

13. Zahnimplantatanordnung nach einem der vorhergehenden Ansprüche, wobei die Heilkomponente (10) eine im Wesentlichen ebene oder konische Oberfläche an ihrem apikalen Ende zum Eingreifen mit dem koronalen Ende des Zahnimplantats (40) aufweist.

14. Zahnimplantat-Kit, umfassend die Zahnimplantatanordnung nach einem der Ansprüche 1-13 und eine Vielzahl der Heilkomponenten (10) mit anatomischen Formen, die für unterschiedliche Zahnpositionen geeignet sind.

## Revendications

1. Ensemble implant dentaire comprenant :
a. un composant de cicatrisation (10) pouvant être fixé de manière amovible à une extrémité coronale d'un implant dentaire (40),
b. un composant d'empreinte (20) pouvant être fixé de manière amovible au composant de cicatrisation (10) par un élément d'ajustement par pression entre le composant d'empreinte (20) et le composant de cicatrisation (10),
ledit composant de cicatrisation (10) comportant un alésage interne (13) destiné à recevoir au moins une partie du composant d'empreinte (20) en son sein, ledit alésage interne (13) comportant un localisateur axial (16) fournissant une butée pour un mouvement axial relatif entre ledit composant de cicatrisation (10) et ledit composant d'empreinte (20),
ledit ensemble comprenant en outre un localisateur de rotation limitant le mouvement de rotation entre ledit composant d'empreinte (20) et ledit composant de cicatrisation (10), ledit localisateur de rotation comprenant une partie conformée (24) sur une surface externe du composant d'empreinte (20) et une partie conformée (14) sur une surface interne dudit alésage de sorte que ni le composant d'empreinte ni le composant de cicatrisation ne présente une symétrie de rotation, et
grâce à quoi une impression numérique enregistrant des informations de position concernant l'implant dentaire peut être prise sans qu'il ne soit nécessaire de retirer le composant de cicatrisation (10) de l'implant.

2. Ensemble implant dentaire selon la revendication 1, ledit composant d'empreinte (20) comportant une surface externe, une partie supérieure (21) et une partie inférieure (22),
ledit composant de cicatrisation (10) comprenant ledit alésage interne (13) destiné à recevoir au moins une partie de la partie inférieure (22) dudit composant d'empreinte (20) en son sein, ledit alésage interne (13) comportant un épaulement sur sa surface interne agissant comme ledit localisateur axial, et
ledit localisateur de rotation comprenant une partie conformée (24) sur ladite surface externe du composant d'empreinte (20) et/ou une partie conformée (14) sur ladite surface interne dudit alésage du composant de cicatrisation (10).

3. Ensemble implant dentaire selon la revendication 2, ledit épaulement s'engageant avec une surface d'extrémité apicale (25) du composant d'empreinte (20) pour fournir ledit localisateur axial (16).

4. Ensemble implant dentaire selon la revendication 1 ou la revendication 2, ladite partie conformée (14) sur ladite surface interne dudit alésage (13) du composant de cicatrisation (10) comprenant une rainure et ladite partie conformée (24) sur ladite surface externe du composant d'empreinte (20) comprenant une protubérance.

5. Ensemble implant dentaire selon la revendication 1 ou la revendication 2, ladite partie conformée sur ladite surface interne dudit alésage (13) du composant de cicatrisation (10) comprenant une protubérance et ladite partie conformée sur ladite surface externe du composant d'empreinte comprenant une rainure.

6. Ensemble implant dentaire selon l'une quelconque des revendications précédentes, ledit composant de cicatrisation (10) comprenant de la PEEK ou du titane.

7. Ensemble implant dentaire selon l'une quelconque des revendications précédentes, ledit composant d'empreinte (20) comprenant un matériau et/ou une surface texturée compatible avec le balayage numérique.

8. Ensemble implant dentaire selon l'une quelconque des revendications précédentes, ledit élément d'ajustement par pression comprenant un rétrécissement localisé (18) de l'alésage interne (13) du composant de cicatrisation (10) et/ou un élargissement localisé du diamètre externe de la partie inférieure (22) du composant d'empreinte (20).

9. Ensemble implant dentaire selon l'une quelconque des revendications précédentes, comprenant en outre un élément de centrage (17) destiné à centrer le composant d'empreinte dans l'alésage du composant de cicatrisation (10), de préférence ledit élément de centrage (17) comprenant un bord coronal chanfreiné sur l'alésage (13) du composant de cicatrisation (10) et/ou ledit élément de centrage (17) comprenant un évidement sur une surface externe au niveau de l'extrémité apicale (25) du composant d'empreinte (20).

10. Ensemble implant dentaire selon l'une quelconque des revendications précédentes, lesdites informations de position comprenant un quelconque élément parmi :
a. la hauteur de l'extrémité coronale de l'implant dentaire (40) ;
b. l'orientation de rotation de l'implant dentaire (40) autour d'un axe longitudinal de l'implant ;
c. l'angulation d'un plan contenant la surface supérieure coronale de l'implant dentaire (40), par rapport à un plan horizontal ou à un point de référence anatomique et/ou à un autre implant.

11. Ensemble implant dentaire selon l'une quelconque des revendications précédentes, ladite partie supérieure (21) dudit composant d'empreinte (20) comprenant :
a. un cône ou une pyramide (23) ou une autre forme au niveau de son extrémité coronale, dont la pointe et/ou les coins et/ou les faces peuvent être utilisés comme marqueur pour des informations de position pendant et/ou après leur balayage numérique ; et/ou
b. une surface sensiblement horizontale et/ou une surface sensiblement verticale qui peuvent être utilisées comme marqueur pour des informations de position pendant et/ou après leur balayage numérique.

12. Ensemble implant dentaire selon la revendication 11, lorsque ledit localisateur axial est engagé, ledit composant d'empreinte (20) et ledit composant de cicatrisation (10) combinés comportant une hauteur prédéfinie mesurée à partir de ladite surface sensiblement horizontale sur ledit composant d'empreinte (20) qui dépend des dimensions du composant d'empreinte (20) et/ou du composant de cicatrisation (10) choisis.

13. Ensemble implant dentaire selon l'une quelconque des revendications précédentes, ledit composant de cicatrisation (10) comportant une surface sensiblement plane ou conique au niveau de son extrémité apicale destinée à s'engager avec l'extrémité coronale de l'implant dentaire (40).

14. Kit d'implant dentaire comprenant l'ensemble implant dentaire selon l'une quelconque des revendications 1 à 13 et une pluralité desdits composants de cicatrisation (10) comportant des formes anatomiques adaptées à différentes positions de dents.
